# EUROPÄISCHE PATENTSCHRIFT

(11) **EP 3 091 353 B1**
(45) Veröffentlichungstag und Bekanntmachung des Hinweises auf die Patenterteilung: **16.02.2022**
(21) Anmeldenummer: 16168316.4
(22) Anmeldetag: 04.05.2016
(51) Int. Cl.: G01N 29/22

(54) **VERFAHREN FÜR DIE EINSEITIGE ZERSTÖRUNGSFREIE PRÜFUNG VON OBJEKTEN AUS VERSCHIEDENEN MATERIALIEN**
METHODS FOR ONE-SIDED NONDESTRUCTIVE TESTING OF OBJECTS MADE OF DIFFERENT MATERIALS
PROCEDES POUR LA VERIFICATION UNILATERALE NON DESTRUCTIVE D'OBJETS FABRIQUES A PARTIR DE DIFFERENTS MATERIAUX

(30) Priorität: 04.05.2015 DE 102015106872
(43) Veröffentlichungstag der Anmeldung: 09.11.2016
(73) Patentinhaber: Inoson GmbH, 66386 St. Ingbert (DE)
(72) Erfinder: Dr. Gebhardt, Wolfgang, 66538 Spiesen-Elversberg (DE); Dr. Hübschen, Gerhard, 66740 Saarlouis (DE)
(74) Vertreter: Patentanwaltskanzlei Vièl & Wieske PartGmbB

(56) Entgegenhaltungen:
- EP-A2- 0 232 794
- JP-A- 2005 055 197
- JP-A- 2008 164 394
- JP-A- 2009 150 692
- JP-U- S63 167 254
- US-A1- 2006 053 891
- US-A1- 2006 053 892
- US-A1- 2008 302 188
- US-A1- 2010 269 591
- US-B1- 6 907 786

## Beschreibung

Die Erfindung betrifft ein Verfahren für die einseitige, luftgekoppelte und damit koppelmittelfreie zerstörungsfreie Prüfung von Objekten aus verschiedenen Materialien.

Ultraschalltechniken zur Suche und Analyse von Fehlstellen sowie zur Charakterisierung von Werkstoffeigenschaften werden seit vielen Jahren in der zerstörungsfreien Werkstoffprüfung mit Erfolg eingesetzt. Hierbei wird das zu prüfende Teil mit einem oder mehreren Ultraschallwandlern (Ultraschallprüfköpfen) abgetastet und die Empfangssignale in geeigneter Weise (beispielsweise in Bildform) auf einem Bildschirm dargestellt.

Üblicherweise werden die Ultraschallimpulse in den Testkörper ein- und ausgekoppelt, indem die Prüfköpfe über die Objektoberfläche bewegt werden und die Ultraschallpulse über eine dünne Flüssigkeitsschicht in den Körper eingeleitet werden (Kontakttechnik).

Bisweilen wird das Objekt auch in ein Wasserbad eingetaucht und die Ultraschall-Wandleranordnung mit einer Scanvorrichtung entlang vorgegebener Prüfspuren bewegt.

Eine weitere Möglichkeit der Ultraschallanregung ist die Squirtertechnik, bei der die Schallimpulse über einen Wasserstrahl in das Objekt eingekoppelt werden.

Eine Einkopplung der Ultraschallsignale mittels flüssiger Medien ist aber oft nicht erwünscht, nicht erlaubt oder technisch nicht möglich.

Seit Jahren arbeiten daher Firmen und Institute an Ultraschallprüfsystemen, bei denen die Ultraschallimpulse über eine Luftstrecke ins Objekt ein- und ausgekoppelt werden (luftgekoppelter Ultraschall).

Hierbei kann die Schallausbreitungsrichtung entweder in Dickenrichtung der Komponente oder parallel zur Oberfläche (Oberflächenwelle, Plattenwelle) erfolgen. Im ersteren Fall ist die luftgekoppelte Prüfung meist nur in Durchschallungstechnik möglich, weil die extrem großen Energieunterschiede der Signale von Objektoberfläche und Objektinnern die "einseitige" Prüfung (Sender und Empfänger befinden sich auf der gleichen Seite des Objekts) verhindern. Eine zweiseitige Zugänglichkeit ist in vielen Fällen jedoch nicht gegeben.

Erleichtert wird die einseitige Prüfung im Falle der Anwendung von Oberflächen- und Plattenwellen. Gründe hierfür sind die bessere impedanzmäßige Anpassung, die geringeren störenden Oberfächenflexionen sowie die wesentlich längeren Schalllaufwege. Vorteilhaft ist hierbei der wesentlich größere Prüfbereich, wodurch die Prüfzeiten erheblich reduziert werden.

Bei den heute eingesetzten Luftschalltechniken, wie beispielsweise in der US 2015/ 0 068 296 A1 offenbart, werden Sende- und Empfangswandler räumlich mit Befestigungselementen und Einspannvorrichtungen gegeneinander und/oder gegenüber voneinander fixiert. Hierbei sind die Sende- und Empfangswandler derart gegenüber gewinkelt angeordnet, dass eine Messstrecke zwischen den Wandlern festgelegt wird, die dann messbar ist. Die Wandler können dann, wobei u.a. die Abstände der Wandler exakt eingehalten werden müssen, frei gegenüber dem zu prüfenden Objekt bewegt werden. In den Druckschriften JP-A-2005055197 und US 2008/0 302 188 A1 werden auch Vorrichtungen offenbart, die diese Luftschalltechnik verwenden.

Die Geometrie der Prüfanordnung (Winkel, Abstände Prüfköpfe zu Schalleintrittspunkten) muss bei den bekannten Luftschalltechniken exakt eingestellt werden und muss während des Scan-Prozesses konstant gehalten werden. Daher ist bei der bisherigen Technik die Reproduzierbarkeit problematisch.

Eine Handprüfung ist mit diesen Wandleranordnungen ausgeschlossen.

Insgesamt lässt sich die heutige Situation der "einseitigen" Prüfung mit luftgekoppelten Platten- oder Oberflächenwellen wie folgt charakterisieren:
- Der Wandler zum Senden von Ultraschallpulsen und der Wandler zum Empfangen von Ultraschallsignalen stehen sich in einem bestimmten Abstand gegenüber.
- Die für den gewählten Wellenmode erforderlichen Winkel müssen exakt eingestellt werden und dürfen sich während dem Scanvorgang nicht ändern.
- Die Abstände des Wandlers zum Senden von Ultraschallpulsen zu Schalleintrittspunkt und Schallaustrittspunkt zu Wandler zum Empfangen von Ultraschallsignalen müssen während dem Scanvorgang exakt konstant gehalten werden.

Es ist daher die Aufgabe der Erfindung ein Verfahren bereitzustellen, welche die oben genannten Nachteile überwinden.

Die Aufgabe wird bei einem Verfahren für die einseitige zerstörungsfreie Prüfung von Objekten aus verschiedenen Materialien mit Oberflächenwellen oder Plattenwellen mit einer Vorrichtung dadurch gelöst, dass die Vorrichtung wenigstens ein Gehäuse umfasst, wobei in dem Gehäuse wenigstens zwei Wandler angeordnet sind, wobei wenigstens einer der Wandler ein erster Wandler zum Erzeugen von Ultraschallpulsen ist und wenigstens einer der Wandler ein zum ersten Wandler beabstandet angeordneter zweiter Wandler zum Empfangen von Ultraschallsignalen ist, wobei die wenigstens zwei Wandler durch wenigstens einen gasgefüllten Raum beabstandet gegenüber dem zu prüfenden Objekt angeordnet sind, und die Vorrichtung Verbindungsmittel zum Verbinden der Vorrichtung mit einer Ansteuer- und Auswertevorrichtung umfasst, durch die der erste Wandler ansteuerbar und die vom zweiten Wandler empfangenen Signale auswertbar sind. Es ist hierbei vorgesehen, dass der erste Wandler in einem Winkel zwischen 0° und 90° gegenüber dem zu prüfenden Objekt angeordnet ist und der zweite Wandler ebenfalls in einem Winkel zwischen 0° und 90° gegenüber dem zu prüfenden Objekt angeordnet ist, wobei der Winkel des ersten Wandlers und der Winkel des zweiten Wandlers gegenüber dem zu prüfenden Objekt gleich ist, wobei die wenigstens zwei Wandler gegenüber dem zu prüfenden Objekt in dieselbe Richtung geneigt sind und der erste Wandler parallel zu dem zweiten Wandler angeordnet ist, wobei die Vorrichtung eine Abstandskontrolleinheit aufweist, die die Abstände zwischen der Vorrichtung und dem zu prüfenden Objekt überwacht, wobei eine Luftkissenvorrichtung im unteren Bereich der Vorrichtung angeordnet ist, bestehend aus den Schritten:
- Führen der Vorrichtung entlang der Objektoberfläche oder stationäres Positionieren der Vorrichtung auf dem Objekt,
- Erzeugen von Ultraschallpulsen mit wenigstens einer vorgegebenen Frequenz und einem gewählten Einfallswinkel zur Erzeugung von Oberflächenwellen oder Plattenwellenmoden in dem Objekt,
- Erfassen des als Oberflächenwellen oder Plattenwellenmoden propagierten Ultraschalls mit Abstand zum Einstrahlungsort,
- Auswerten und Analysieren der erfassten Signale.

Ebenso wird die Aufgabe beim Verfahren für die einseitige zerstörungsfreie Prüfung von Objekten aus verschiedenen Materialien mit Oberflächenwellen oder Plattenwellen mit einer Vorrichtung dadurch gelöst, dass die Vorrichtung wenigstens zwei Gehäuse und wenigstens zwei Wandler umfasst, wobei in jedem der Gehäuse wenigstens einer der wenigstens zwei Wandler angeordnet ist, wobei wenigstens einer der Wandler ein erster Wandler zum Erzeugen von Ultraschallpulsen ist und wenigstens einer der Wandler ein zum ersten Wandler beabstandet angeordneten zweiter Wandler zum Empfangen von Ultraschallsignalen ist, wobei die wenigstens zwei Wandler durch wenigstens einen gasgefüllten Raum beabstandet gegenüber dem zu prüfenden Objekt angeordnet sind, und die Vorrichtung Verbindungsmittel zum Verbinden der Vorrichtung mit einer Ansteuer- und Auswertevorrichtung umfasst, durch die der erste Wandler ansteuerbar und die vom zweiten Wandler empfangenen Signale auswertbar sind. Auch bei dieser Lösung ist vorgesehen, dass der erste Wandler in einem Winkel zwischen 0° und 90° gegenüber dem zu prüfenden Objekt angeordnet ist und der zweite Wandler ebenfalls in einem Winkel zwischen 0° und 90° gegenüber dem zu prüfenden Objekt angeordnet ist, wobei der Winkel des ersten Wandlers und der Winkel des zweiten Wandlers gegenüber dem zu prüfenden Objekt gleich ist, wobei die wenigstens zwei Wandler gegenüber dem zu prüfenden Objekt in dieselbe Richtung geneigt sind und der erste Wandler parallel zu dem zweiten Wandler angeordnet ist, wobei die Vorrichtung eine Abstandskontrolleinheit aufweist, die die Abstände zwischen der Vorrichtung und dem zu prüfenden Objekt überwacht, wobei eine Luftkissenvorrichtung im unteren Bereich der Vorrichtung angeordnet ist, bestehend aus den Schritten:
- Führen der Vorrichtung entlang der Objektoberfläche oder stationäres Positionieren der Vorrichtung auf dem Objekt,
- Erzeugen von Ultraschallpulsen mit wenigstens einer vorgegebenen Frequenz und einem gewählten Einfallswinkel zur Erzeugung von Oberflächenwellen oder Plattenwellenmoden in dem Objekt,
- Erfassen des als Oberflächenwellen oder Plattenwellenmoden propagierten Ultraschalls mit Abstand zum Einstrahlungsort,
- Auswerten und Analysieren der erfassten Signale.

Jede der Vorrichtungen ist in ihren Dimensionen und ihrem Gewicht derart ausgelegt, dass sie durch Muskelkraft handgeführt entlang des Objekts bewegt werden kann. Es ist ebenso vorstellbar, dass die Vorrichtungen scannergeführt entlang des Objekts bewegbar sind. Vorzugsweise ist die Wandlereinheit für die einseitige Prüfung mit Platten- oder Oberflächenwellen einsetzbar.

Wegen der Führung entlang der Objektoberfläche werden Einschallwinkel und Austrittswinkel automatisch konstant gehalten. Das gleiche gilt für die Abstände erster Wandler zum Erzeugen von Ultraschallpulsen - Schalleintrittspunkt und Schallaustrittspunkt - Wandler zum Empfangen von Ultraschallsignalen (Empfänger). Durch die konstanten Abstände des Einschallwinkels und des Austrittwinkels wird eine hohe Reproduzierbarkeit ermöglicht.

Für beide Vorrichtungen ist vorgesehen, dass der Wandler zum Erzeugen von Ultraschallpulsen ein Sender sein kann, der Luftschallwellen aussendet, welche an der Bauteiloberfläche Oberflächenwellen oder Plattenwellen anregt.

Dadurch, dass die zwei Wandler durch wenigstens einen gasgefüllten Raum beabstandet gegenüber dem zu prüfenden Objekt angeordnet sind, wird für jede der Vorrichtungen vorteilhaft erreicht, dass die Objekte koppelmittelfrei geprüft werden können. Dies ist insbesondere vorteilhaft für Anwendungen, wie beispielsweise Feinstbleche und dünne Bleche im Automobilbau, bei denen die Oberfläche nicht verunreinigt oder nicht benetzt werden dürfen.

Bei dem gasgefüllten Raum zwischen dem Objekt und dem jeweiligen Wandler kann es sich um Umgebungsluft handeln. Ebenso ist vorstellbar, dass die Vorrichtungen in einer gasförmigen Umgebung eingesetzt werden (beispielsweise in einem Stickstoffraum), wodurch der gasgefüllte Raum entsprechend der gasförmigen Umgebung mit dem jeweiligen Gas gefüllt ist.

Die Objekte, die durch die Vorrichtungen für die einseitige zerstörungsfreie Prüfung geprüft werden, können beispielsweise Plattenprodukte, Rohre, dickwandige Komponenten mit beliebigen Oberflächenformen, Schienen oder dergleichen, aber auch Lebensmittel, wie beispielsweise Fertiggerichte, Tiefkühlprodukte oder Ähnliches sein. Ebenso kann das zu prüfende Objekt aus Materialien wie Eisen, Aluminium, Verbundmaterialien, organischem Material (wie im Fall von Lebensmitteln oder dergleichen) bestehen und sowohl homogen als auch heterogen sein.

In den Vorrichtungen sind wenigstens zwei Wandler angeordnet, wobei wenigstens einer der Wandler ein erster Wandler zum Erzeugen von Ultraschallpulsen ist und wenigstens einer der Wandler ein zum ersten Wandler beabstandet angeordneten zweiter Wandler zum Empfangen von Ultraschallsignalen ist. Der erste Wandler und der zweite Wandler sind jeweils derart in dem Gehäuse bzw. den Gehäusen angeordnet, so dass zwischen den Wandlern und dem zu prüfenden Objekt kein Hindernis angeordnet ist.

Bei beiden Vorrichtungen ist der erste Wandler zum Erzeugen von Ultraschallpulsen in einem Winkel zwischen 0° und 90° gegenüber dem zu prüfenden Objekt angeordnet ist. Weiterhin ist der zweite Wandler zum Empfangen von Ultraschallsignalen ebenfalls in einem Winkel zwischen 0° und 90° gegenüber dem zu prüfenden Objekt angeordnet.

Vorzugsweise ist jeder der Wandler je nach Anwendungsfall (Material, Geometrie) in einem Winkel zwischen 0° und 50° gegenüber dem zu prüfenden Objekt angeordnet.

Durch die für beide Wandler in dieselbe Richtung gegenüber dem zu prüfenden Objekt geneigte Anordnung wird erreicht, dass die die Ultraschallpulse gewinkelt (Einschallwinkel) in/auf das zu prüfende Objekt auftreffen bzw. eindringen, wobei sich daraufhin die angeregten Oberflächenwellen oder Plattenwellen in gerichteter Weise entlang des zu prüfenden Objektes bewegen.

Im Falle, dass ein Fehler (Riss, Pore, Einschluss oder Hindernis) in der Oberfläche des zu prüfenden Objektes vorliegt, werden die angeregten Oberflächenwellen oder Plattenwellen, die auf den Fehler treffen, reflektiert (Echosignal). Der Fehler kann in einem beliebigen Abstand von den wenigstens zwei Wandlern angeordnet sein. Die reflektierten Ultraschallsignale werden daraufhin vom zweiten Wandler zum Empfangen von Ultraschallsignalen empfangen.

Hierbei ist weiterhin vorteilhaft, dass Ultraschallsignale von dem wenigstens einen zweiten Wandler nur empfangen werden, wenn ein Fehler in dem zu prüfenden Objekt vorliegt, da nur dann die Oberflächenwellen oder Plattenwellen zurückgeworfen werden. Neben den Fehleranzeigen können auch (formbedingt) Anzeigen empfangen werden, die durch die Bauteilgeometrie wie Ränder, Absätze und Schweißnahtraupen bedingt sind.

Dementsprechend ist ein zurückgeworfenes/reflektiertes Signal sehr gut zu detektieren. Dies ist vorteilhaft gegenüber bekannten Prüfvorrichtungen, bei denen die Wandler einander gegenüberliegend angeordnet sind und der Wandler zum Empfangen von Ultraschallsignalen konstant von dem Wandler zum Senden von Ultraschallpulsen Signale empfängt. Bei dem in dem Stand der Technik bekannten Verfahren kommt demnach, wenn ein Fehler vorliegt, ein reduziertes Signal bei dem Wandler zum Empfangen an. Dieses Delta ist messtechnisch schwieriger zu ermitteln als bei der erfindungsgemäßen Vorrichtung.

Es ist vorteilhaft, dass die Prüfzeit bei diesem Verfahren gegenüber der herkömmlichen Anordnung stark reduziert ist. Dies geschieht aus folgenden Gründen: Durch die gleiche Ausrichtung der Wandler zeigen Sender- und Empfängerbündel in die gleiche Richtung. Hierdurch wird mit einem Prüfschuss ein dem Laufzeitbereich entsprechender Prüfbereich erfasst (über mehrere Meter). Bei der vorgeschlagenen Puls-Echo-Technik treten nur Echoanzeigen im Prüfbereich auf, wenn Materialfehler vorhanden sind. Bei fehlerfreien Bereichen ist die Grundlinie exakt Null. Bei den aus dem Stand der Technik bekannten Durchschallungstechniken ist hingegen nachteilig, dass der Fehler durch Abschattungseffekte des Empfangssignales nachgewiesen werden muss, wobei das Durchschallungssignal selbst im fehlerfreien Bereich schwankt.

Die in dieselbe Richtung gewinkelt angeordneten Wandler ermöglichen weiterhin, dass eine Fehlerprüfung außerhalb der (Auflage-)Fläche der Vorrichtung stattfinden kann. Ebenso wird durch die Anordnung der Wandler erreicht, dass nicht nur die Strecke zwischen den Wandlern geprüft werden kann. Vielmehr kann eine beliebige Strecke geprüft werden.

Es ist vorteilhaft zu der Erfindung gehörig, dass zwischen dem wenigstens einen ersten Wandler und dem wenigstens einen zweiten Wandler wenigstens eine schallabsorbierende und/oder reflektierende Schicht angeordnet ist.

Eine schallabsorbierende Schicht ist zwischen dem ersten und dem zweiten Wandler angeordnet, um eine akustische Isolierung der Prüfköpfe zu erreichen.

Die schallabsorbierende Schicht kann als plattenförmige Schicht zwischen dem ersten und dem zweiten Wandler angeordnet sein. Diese plattenförmige Schicht erstreckt sich vorzugsweise vom oberen Bereich des Gehäuses bis zum unteren Bereich des Gehäuses, so dass eine Teilung des Innenbereichs des Gehäuses erreicht wird. Ebenso ist vorstellbar, dass die schallabsorbierende Schicht durch das Gehäuse gebildet wird. Es ist jedoch ebenso vorstellbar, dass jeder der Wandler eine schallabsorbierende Schicht als Ummantelung aufweist. Hierbei ist jede der Mantelflächen derart um die Wandler angeordnet, so dass der Wandler zum Erzeugen von Ultraschallpulsen ohne Behinderung durch die schallabsorbierende Schicht Ultraschallpulse in Richtung des Objekts senden kann und der Empfangswandler ohne Behinderung durch die schallabsorbierende Schicht Ultraschallsignale von dem Objekt empfangen kann. Ebenso vorstellbar ist, dass der gesamte Innenraum des Gehäuses, mit Ausnahme der Bereiche in dem die Wandler Ultraschallimpulse erzeugen oder senden und empfangen, mit der schallabsorbierenden Schicht ausgefüllt ist. Die schallabsorbierende Schicht kann aus jeglichem Material bestehen, welches eine akustische Isolierung der Prüfköpfe ermöglicht. Geeignete Materialien sind Schaumstoffe, spezielle Vergussmassen, Kork usw.

Ebenso ist vorstellbar, dass eine reflektierende und oder streuende Schicht derart in dem Gehäuse angeordnet ist, so dass der Schall in Bereiche derart abgelenkt wird, dass der Empfänger vor Vagabundieren geschützt wird.

Das Gehäuse der Vorrichtung kann aus Metall bestehen. Insbesondere Aluminium oder Eisen sind geeignet, da diese Metalle, wegen ihrer Leitfähigkeit, den Wandler gegenüber elektrischen Einstreuungen abschirmen. Es ist jedoch ebenso vorstellbar, dass das Gehäuse aus Verbundmaterialien und/oder Kunststoffen besteht Hierbei ist vorgesehen, dass das Gehäuse mit einer leitfähigen Auskleidung ausgerüstet ist.

Ein Metallgehäuse hat den Vorteil der höheren mechanischen Stabilität. Ein Gehäuse aus Verbundmaterialien und/oder Kunststoff hat den Vorteil, dass das Gewicht der Vorrichtung reduziert wird. Bei dem Kunststoffgehäuse ist weiter vorstellbar, dass es mit einer elektrisch leitfähigen Folie ausgekleidet ist, um elektrische Einstreung zu verhindern.

Es ist vorteilhaft vorgesehen, dass der Winkel des ersten Wandlers und der Winkel des zweiten Wandlers auf Wunsch manuell oder automatisiert einstellbar sind.

Der Winkel der Wandler gegenüber dem Objekt kann hierbei zwischen 0° und 90° gewählt werden. Durch die Winkelanordnung erfolgt eine gerichtete Sendung von Ultraschallpulsen, wobei die Richtung durch den Winkel des Wandlers gegenüber dem Objekt bestimmt ist. Ebenso ist es vorteilhaft, dass der zweite Wandler, der ebenfalls in einem Winkel gegenüber dem Objekt angeordnet ist, die Ultraschallsignale empfängt.

Bei allen vorgenannten Ausführungsbeispielen ist vorgesehen, dass die Wahl der Winkel von den gewünschten Plattenwellenmoden abhängt.

Eine weitere vorteilhafte Ausgestaltung der Erfindung sieht vor, dass der erste Wandler und der zweite Wandler segmentiert sind und die erzeugten Ultraschallpulse und die empfangenen Ultraschallsignale gemäß des Phased-Array-Prinzips einzeln elektronisch ansteuerbar sind.

Dies ist vorteilhaft, da die Sende- und Empfangscharakteristiken (Schallbündelschwenken, Fokussieren) elektronisch verändert werden können. Diese Ausführungsform besitzt weiterhin den Vorteil, dass man mit dem gleichen Wandler unterschiedliche Plattenwellenmoden an unterschiedlich dicken Objekten gezielt anregen kann.

Es ist vorteilhaft vorgesehen, dass die Ansteuer- und Auswertevorrichtung und der erste Wandler zusammen zur Erzeugung von Ultraschallsignale mit einer Frequenz von 50 kHz bis 2 MHz, vorzugsweise von 100 bis 400 kHz ausgebildet sind.

Die Frequenz der Ultraschallsignale wird entsprechend dem Material, der Dicke des Objekts und der gewünschten Mode gewählt. Wenn Oberflächenwellen verwendet werden sind Frequenzen der Ultraschallsignale von bis zu 2 MHz verwendbar. Bei Plattenwellen werden vorzugsweise Frequenzen der Ultraschallsignale bis zu 1 MHz verwendet. Vorzugsweise werden Frequenzen der Ultraschallsignale von 100 bis 400 kHz verwendet.

Weiterhin ist im Rahmen der Erfindung vorgesehen, dass Kufen, Abstandshalter oder dergleichen im unteren Bereich der Vorrichtung angeordnet sind.

Der untere Bereich der Vorrichtung ist der Bereich, der unterhalb der halben Höhe der Vorrichtung angeordnet ist. Im unteren Bereich, vorzugsweise unterhalb der Vorrichtung, können Kufen bzw. Gleitkufen, Rollen, Abstandshalter oder dergleichen angeordnet sein.

Die Kufen bzw. Gleitkufen, Rollen, Abstandshalter oder dergleichen bewirken, dass die Vorrichtung stets in einem definierten Abstand über das Objekt bewegt bzw. gehalten wird. Hierdurch wird erreicht, dass der Einschallwinkel und der Austrittswinkel automatisch konstant gehalten werden. Das gleiche gilt für die Abstände erster Wandler zum Erzeugen von Ultraschallpulsen - Schalleintrittspunkt sowie Schallaustrittspunkt - Empfänger (zweiter Wandler zum Empfangen von Ultraschallsignalen).

Die Vorrichtung mit dem ersten und dem zweiten Wandler ist durch einfache konstruktive Erweiterung (Erzeugung eines Luftkissens) auch für eine berührungslose Prüfung geeignet. Dies ist insbesondere vorteilhaft für Anwendungen, bei denen die Objekte empfindliche Oberflächen aufweisen. Durch die berührungslose Prüfung werden diese Oberflächen nicht durch die Vorrichtung beschädigt.

Weiterhin wird durch die Kufen oder dergleichen und die Luftkissenvorrichtung im unteren Bereich der Vorrichtung eine hohe Reproduzierbarkeit der zerstörungsfreien Prüfung von Objekten ermöglicht.

Die Vorrichtung kann zusätzlich eine Temperaturmesseinrichtung umfassen. Die Temperaturmesseinrichtung ist vorzugsweise dann in oder an der Vorrichtung angeordnet, wenn präzise Laufzeitmessungen durchgeführt werden sollen, da die Schallgeschwindigkeit in den gasförmigen Vorlaufstrecken temperaturabhängig ist.

Es ist ebenso vorgesehen, dass die Vorrichtung eine Abstandskontrolleinheit aufweist, die die Abstände zwischen der Vorrichtung und dem zu prüfenden Objekt (auf Wunsch kontinuierlich) überwacht. Im Falle eines Abweichens eines voreingestellten Abstandes (zwischen der Vorrichtung und dem Objekt) ist vorgesehen, dass die Abstandskontrolleinheit diese Abweichung anzeigt und/oder protokolliert und/oder einen akustischen Warnhinweis erzeugt.

Ob die Vorrichtung entlang der Objektoberfläche geführt wird oder stationär positioniert wird hängt von der Aufgabenstellung ab.

Wenn eine Fehlerüberprüfung, wie beispielsweise Überprüfung von Schweißverbindungen, Klebungen, Nietverbindungen oder Punktschweißungen oder eine Materialcharakterisierung, wie beispielsweise Spannungsmessung, Texturbestimmung oder Dichtemessung durchgeführt werden soll, bietet es sich an, die Vorrichtung entlang der Objektoberfläche zu führen.

Soll jedoch eine Zustandsüberwachung, wie beispielsweise eine Positionsbestimmung oder eine Füllstandmessung bereitgestellt werden, ist es sinnvoll, dass die Vorrichtung stationär positioniert ist.

Vorzugsweise erfolgt das Erzeugen von Ultraschallpulsen durch den ersten Wandler gepulst oder kontinuierlich. Es ist vorzugsweise vorgesehen, dass das Erzeugen der Ultraschallpulse mit wenigstens einer vorgegebenen Frequenz und einem gewählten Einfallswinkel zur Erzeugung von Oberflächenwellen oder Plattenwellenmoden in dem Objekt erfolgt.

Das Erfassen des als Oberflächenwellen oder Plattenwellenmoden propagierten Ultraschalls mit Abstand zum Einstrahlungsort erfolgt durch den zweiten Wandler. Hierbei ist vorgesehen, dass das Erfassen des propagierten Ultraschalls zeitaufgelöst erfolgt, wenn für das Prüfergebnis die Laufzeitinformation wesentlich ist.

Die erfassten Daten werden zu der über Verbindungsmittel verbundenen Ansteuer- und Auswertevorrichtung geleitet, wobei ein Vorverstärker zwischen dem zweiten Wandler und der Ansteuer- und Auswertevorrichtung angeordnet sein kann. Der Vorverstärker ist vorzugsweise ebenfalls im Inneren der Vorrichtung angeordnet. Der Vorverstärker verstärkt die erfassten Signale des zweiten Wandlers und verhindert, dass die Signale während der Weiterleitung (durch teilweise langen Verbindungskabel zwischen der Vorrichtung und der Ansteuer- und Auswertevorrichtung) zu der Ansteuer- und Auswertevorrichtung verloren gehen.

Es ist für das Verfahren vorteilhaft vorgesehen, dass die Vorrichtung manuell oder scannergeführt über die Objekte geführt wird.

Nachfolgend wird die Erfindung anhand von Ausführungsbeispielen näher, aber nicht darauf beschränkt, erläutert.

Es zeigen:
- Fig. 1: einen Längsschnitt durch die Vorrichtung in schematischer Seitenansicht, wobei ein erster und ein zweiter Wandler in einem Gehäuse angeordnet sind,
- Fig. 2: einen Längsschnitt durch die Vorrichtung in schematischer Seitenansicht, wobei ein erster und ein zweiter Wandler jeweils in einem Gehäuse angeordnet sind,
- Fig. 3: einen Längsschnitt durch die Vorrichtung in schematischer Seitenansicht, wobei ein erster und ein zweiter Wandler in dem Gehäuse angeordnet sind und die Wandler segmentiert sind,
- Fig. 4: einen Querschnitt durch die Vorrichtung in schematischer Draufsicht oder Unteransicht, wobei der erste Wandler vor (linke Abbildung) oder parallel zu (rechte Abbildung) dem zweiten Wandler angeordnet ist,
- Fig. 5: einen Längsschnitt durch die Vorrichtung in schematischer Seitenansicht mit Kufen und einem Kragen einer Luftkissenvorrichtung,
- Fig. 6: einen Querschnitt durch die Vorrichtung in schematischer Unteransicht mit Kufen und Luftaustrittsöffnungen einer Luftkissenvorrichtung,
- Fig. 7: einen Längsschnitt durch die Vorrichtung in schematischer Seitenansicht, wobei ein erster und ein zweiter Wandler in einem Gehäuse angeordnet sind und wobei das zu prüfende Objekt einen Fehler aufweist,
- Fig. 8: eine schematische Draufsicht auf die Vorrichtung, welche auf einem zu prüfenden Objekt angeordnet ist, wobei ein erster und ein zweiter Wandler in einem Gehäuse der Vorrichtung angeordnet sind und wobei das zu prüfende Objekt einen Fehler aufweist,
- Fig. 9: ein typisches Laufzeit-Fehlerdiagramm für eine Schallgeschwindigkeit im Bauteil (dem zu prüfenden Objekt) von 3 mm/µs.

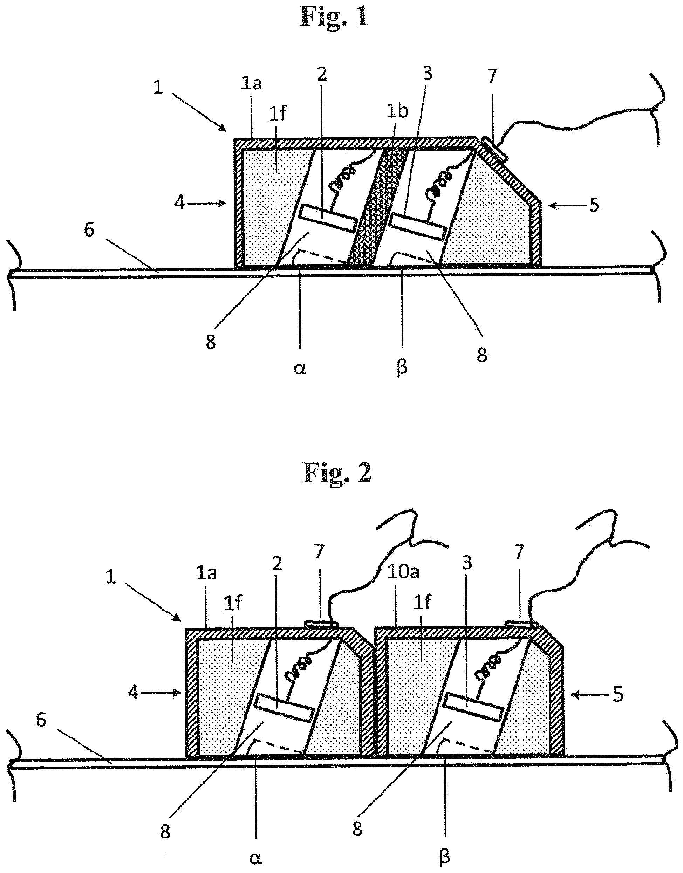

In Fig. 1 ist eine Vorrichtung (1) für die einseitige zerstörungsfreie Prüfung von Objekten (6) aus verschiedenen Materialien mit Oberflächenwellen oder Plattenwellen im Längsschnitt schematisch dargestellt. Die Vorrichtung (1) umfasst ein Gehäuse (1a). Das Gehäuse (1a) kann beispielsweise aus Metall bestehen. In dem Gehäuse (1a) sind Wandler (2, 3) angeordnet. Die dargestellten Wandler (2, 3) sind ein erster Wandler (2) zum Erzeugen und/oder Senden von Ultraschallpulsen und ein zum ersten Wandler (2) beabstandet angeordneten zweiter Wandler (3) zum Empfangen von Ultraschallsignalen (Empfangswandler). Zwischen dem ersten Wandler (2) und dem zweiten Wandler (3) ist wenigstens eine schallabsorbierende Schicht (1b) angeordnet. Wie dargestellt, sind die zwei Wandler (2, 3) jeweils durch einen gasgefüllten Raum (8) beabstandet gegenüber dem zu prüfenden Objekt (6) angeordnet. Weiterhin ist die Vorrichtung (1) mit einer Ansteuer- und Auswertevorrichtung (nicht dargestellt) zur Ansteuerung des ersten Wandlers (2) und zur Auswertung der vom zweiten Wandler (3) empfangenen Signale über die Verbindungsmittel (7) verbunden. Die Verbindung zwischen dem Verbindungsmittel (7) und der Ansteuer- und Auswertevorrichtung (nicht dargestellt) ist als Kabel dargestellt, welches von der Oberfläche zwischen der Oberseite und der Hinterseite (5) der Vorrichtung weggeführt ist.

Wie im Längsschnitt durch die Vorrichtung in Fig.1 dargestellt, sind der erste Wandler (2) und der zweite Wandler (3) in rohrförmigen Aussparungen in der Vorrichtung angeordnet. Zwischen dem wenigstens einen ersten Wandler (2) und dem wenigstens einen zweiten Wandler (3) ist eine schallabsorbierende und/oder reflektierende Schicht (1b) angeordnet. Die rohrförmigen Aussparungen können ebenfalls durch schallabsorbierende Schichten (1b) gebildet sein. Wie in Fig. 1 gezeigt, kann jedoch auch vorgesehen werden, dass die rohrförmigen Aussparungen durch andere Materialien (lf), wie beispielsweise Kunststoff, Kork oder Metall gebildet sind und zwischen oder um diese rohrförmigen Aussparungen schallabsorbierende Schichten angeordnet sind. Ebenso ist vorgesehen, dass die anderen Materialien (1f) den Innenraum, mit Ausnahme der rohrförmigen Aussparungen, ausfüllen. Die rohrförmigen Aussparungen können im Querschnitt rechteckig, rund oder oval sein.

Wie dargestellt, sind der erste Wandler (2) zum Erzeugen von Ultraschallpulsen und der zweite Wandler (3) zum Empfangen von Ultraschallsignalen hintereinander angeordnet. Der erste Wandler (2) zum Erzeugen von Ultraschallpulsen ist vorzugsweise vor (in Richtung Vorderseite (4)) dem zweiten Wandler (3) zum Empfangen von Ultraschallsignalen angeordnet. Diese Anordnung ermöglicht eine vorteilhafte Schallisolation.

Wie weiterhin in Fig. 1 dargestellt bilden beide Wandler (2, 3) mit der Objektoberfläche (6) einen Winkel (α; β), der von dem anzuregenden Plattenwellenmode, der Plattendicke und der Frequenz abhängt. Es ist vorgesehen, dass Winkel (α; β) der beiden Wandler (2, 3) gegenüber dem zu prüfenden Objekt (6) auch verschieden gewählt werden können. Wie aus Fig. 1 ersichtlich ist jeder der Wandler (2, 3) in einem Winkel (α; β) zwischen 20° und 30° gegenüber dem zu prüfenden Objekt (6) angeordnet. Beide Wandler (2, 3) sind schallisoliert in einem gemeinsamen Gehäuse (1a) eingebaut.

In Fig. 2 ist eine Vorrichtung (1) für die einseitige zerstörungsfreie Prüfung von Objekten (6) aus verschiedenen Materialien mit Oberflächenwellen oder Plattenwellen, wobei die Vorrichtung (1) wenigstens zwei Gehäuse (1a, 10a) und wenigstens zwei Wandler (2, 3) umfasst, gezeigt. In jedem der Gehäuse (1a, 10a) ist einer der wenigstens zwei Wandler (2, 3) angeordnet. In Fig. 2 ist der erste Wandler (2) in Richtung Vorderseite (4) und der zweite Wandler (3) in Richtung Hinterseite (5) angeordnet. Vorzugsweise ist der erste Wandler (2) ein Wandler zum Erzeugen von Ultraschallpulsen ist. Der zweite Wandler (3) ist, da er in einem weiteren Gehäuse (10a) angeordnet ist, ein zum ersten Wandler (2) beabstandet angeordneten zweiter Wandler (3) zum Empfangen von Ultraschallsignalen. Wie dargestellt, die zwei Wandler (2, 3) durch jeweils einen gasgefüllten Raum (8) beabstandet gegenüber dem zu prüfenden Objekt (6) angeordnet. Weiterhin umfasst die Vorrichtung (1) Verbindungsmittel (7) zum Verbinden der Vorrichtung (1) mit einer Ansteuer- und Auswertevorrichtung, durch die der erste Wandler (2) ansteuerbar und die vom zweiten Wandler (3) empfangenen Signale auswertbar sind.

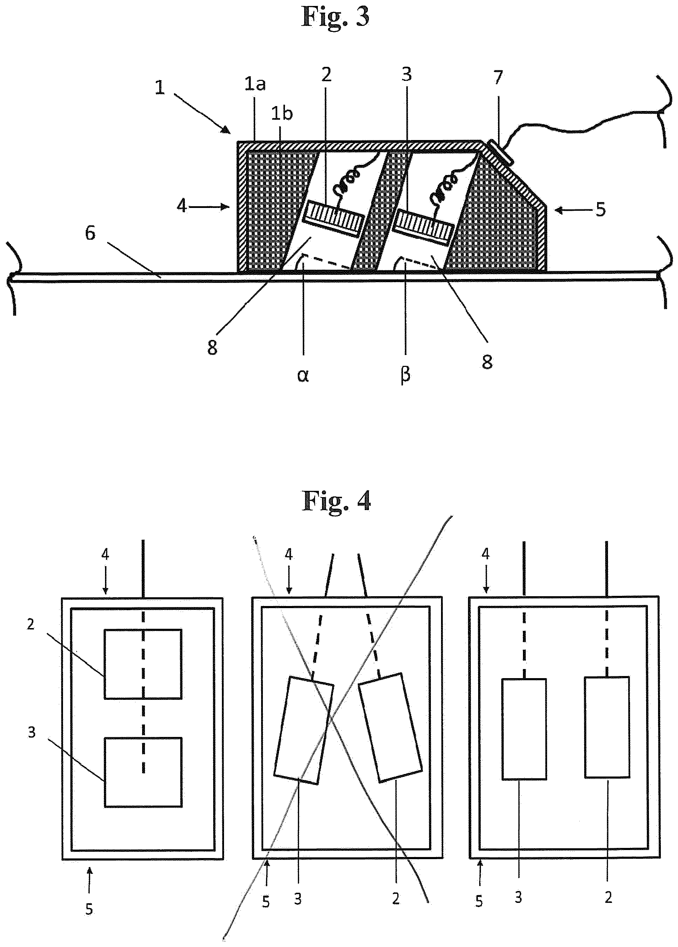

In Fig. 3 ist eine weitere Ausführungsform der Vorrichtung (1) für die einseitige zerstörungsfreie Prüfung von Objekten (6) aus verschiedenen Materialien mit Oberflächenwellen oder Plattenwellen im Längsschnitt schematisch dargestellt. Zwischen dem wenigstens einen ersten Wandler (2) und dem wenigstens einen zweiten Wandler (3) sowie im Innenraum des Gehäuses (1a) ist eine schallabsorbierende und/oder reflektierende Schicht (1b) angeordnet. In dieser Ausführungsform sind die beiden Wandler (2, 3) jeweils in Einzelsegmente unterteilt. Die Wandler (2, 3) können nach dem Phased-Array-Prinzip einzeln elektronisch angesteuert werden, sodass die Sende- und Empfangscharakteristiken (Schallbündelschwenken, Fokussieren) elektronisch verändert werden können. Diese Ausführungsform besitzt den Vorteil, dass man mit dem gleichen Wandler (2; 3) unterschiedliche Plattenwellenmoden an unterschiedlich dicken Objekten (6), beispielsweise Platten, gezielt anregen kann. Die übrigen Merkmale entsprechen den Merkmalen aus Fig. 1.

In Fig. 4 sind zwei Querschnitte durch die Vorrichtung (1) in schematischer Draufsicht oder Unteransicht dargestellt. Wie dargestellt, ist der erste Wandler (2) vor (linke Abbildung) oder parallel zu (rechte Abbildung) dem zweiten Wandler (3) angeordnet. In Abhängigkeit der Geometrie des Prüflings (Objekt) kann es zweckmäßig sein die eine oder andere Anordnung der Wandler - parallel oder hintereinander zu wählen. . Die linke und rechte Anordnung wird vorteilhaft gewählt, wenn man einen größeren Prüfbereich abdecken will, wobei die Auswahl der Wandleranordnung und damit die Abmessung des Prüfkopfgehäuses ein Auswahlkriterium darstellt.

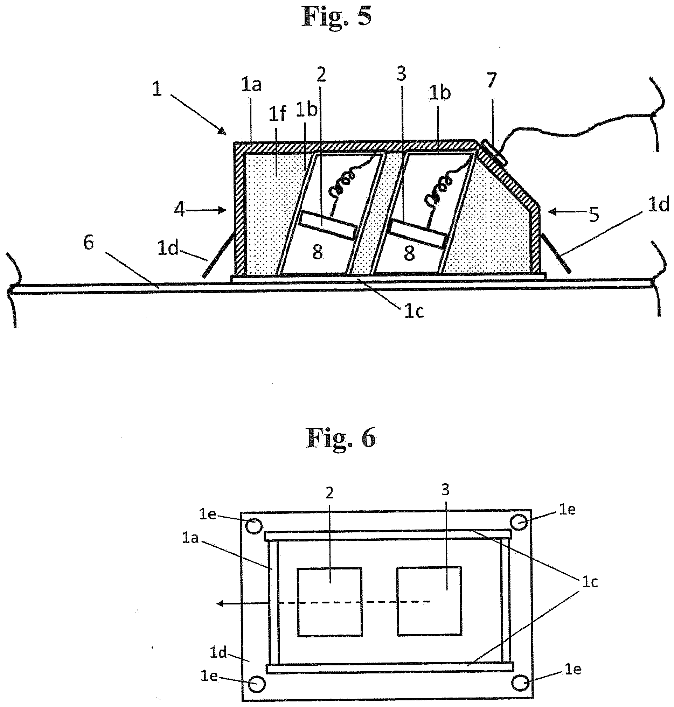

In Fig. 5 ist eine weitere Ausführungsform der Vorrichtung (1) für die einseitige zerstörungsfreie Prüfung von Objekten (6) aus verschiedenen Materialien mit Oberflächenwellen oder Plattenwellen im Längsschnitt schematisch dargestellt. In dieser Ausführungsform weist die Vorrichtung sowohl Gleitkufen (1c) als auch einen Kragen oder Rahmen (1d) einer Luftkissenvorrichtung auf. Die Gleitkufen (1c) erstrecken sich vorzugsweise von der Vorderseite (4) zu der Hinterseite (5) der Vorrichtung (1), wobei die Gleitkufen (1c) vorzugsweise an der Außenseite des Gehäuses angeordnet sind, so dass sie nicht die nach vorne (4) gerichtet ausgesendeten Ultraschallpulse und die zurückkommenden Signale behindern. Bei der Hand- oder der automatisierten Prüfung wird die Vorrichtung schleifend über die Objektoberfläche (6) bewegt. Hierdurch ist gewährleistet, dass alle Parameter (Auftreffwinkel, Einschallpunkte, Laufwege in der Luft) während dem Scan-Prozess konstant gehalten werden. Wie dargestellt, können die rohrförmigen Aussparungen ebenfalls durch die schallabsorbierenden Schichten (1b) gebildet sein.

In Fig. 6 ist die Vorrichtung (1) der Fig. 4 in schematischer Unteransicht dargestellt. Wie dargestellt, ist der erste Wandler (2) zum Erzeugen von Ultraschallpulsen vor dem zweiten Wandler (3) zum Empfangen von Ultraschallsignalen angeordnet. Die Gleitkufen (1c) erstrecken sich von der Vorderseite (4) zu der Hinterseite (5) der Vorrichtung (1). Ein berührungsloses Abscannen der Objektoberfläche ist durch einen zusätzlichen oder alleinigen Luftkissenbetrieb möglich. Hierbei kann die Vorrichtung von einem Rahmen oder Kragen (1d) umgeben sein, der mit mehreren Luftauslassöffnungen (le) versehen ist. Ebenso ist vorstellbar, dass die Vorrichtung keinen Rahmen oder Kragen aufweist und die Luftaustrittsöffnungen (1e) um die Wandler (2, 3) herum angeordnet sind.

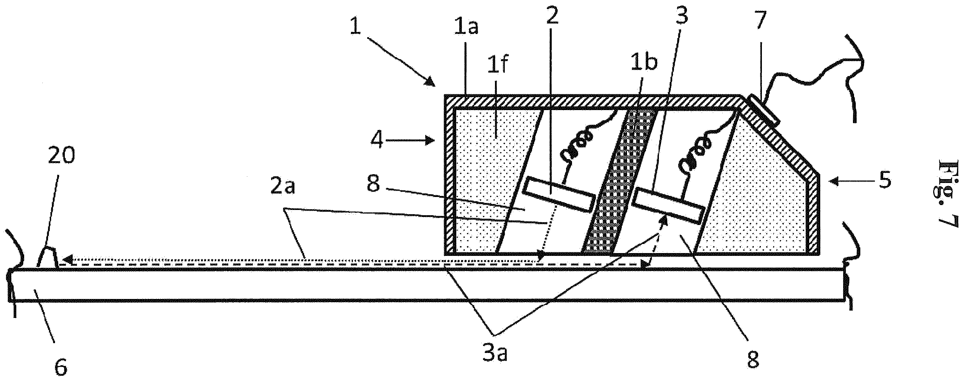

In Fig. 7 ist die Vorrichtung (1) für die einseitige zerstörungsfreie Prüfung von Objekten (6) aus verschiedenen Materialien mit Oberflächenwellen oder Plattenwellen im Längsschnitt schematisch dargestellt. Wie dargestellt, weist das zu prüfende Objekt (6) einen Fehler (20), hier eine Hervorhebung, auf. Der Ablauf der Prüfung ist wie folgt: Der erste Wandler zum Erzeugen von Ultraschallsignalen bzw. Sendewandler (2) erzeugt wenigstens ein Ultraschallsignal bzw. Ultraschallpuls (gepunkteter Pfeil 2a; zwischen dem ersten Wandler (2) und der Prüflingsoberfläche des zu prüfenden Objektes (6) dargestellt). Dieses Ultraschallsignal bzw. dieser Ultraschallpuls läuft bis zur Prüflingsoberfäche des zu prüfenden Objektes (6) und wird dort in eine Platten- oder Oberflächenwelle umgewandelt. Die Oberflächen- oder Plattenwelle (gepunkteter Pfeil 2a; parallel zu der Prüflingsoberfläche des zu prüfenden Objektes (6) dargestellt) breitet sich, da sie gerichtet verläuft, nach vorne aus und wird von etwaigen Fehlern bzw. Reflektoren (20) reflektiert. Die zurückreflektierten Signale (gestrichelter Pfeil 3a; parallel zu der Prüflingsoberfläche des zu prüfenden Objektes (6) dargestellt) laufen zum Prüfkopf zurück und werden an der Luft teilweise in Luftschallimpulse (gestrichelter Pfeil 3a; zwischen der Prüflingsoberfläche des zu prüfenden Objektes (6) und dem zweiten Wandler zum Empfangen von Ultraschallsignalen (3) dargestellt) umgewandelt. Die Luftschallsignale werden dann vom zweiten Wandler zum Empfangen von Ultraschallsignalen bzw. Empfangswandler (3) detektiert.

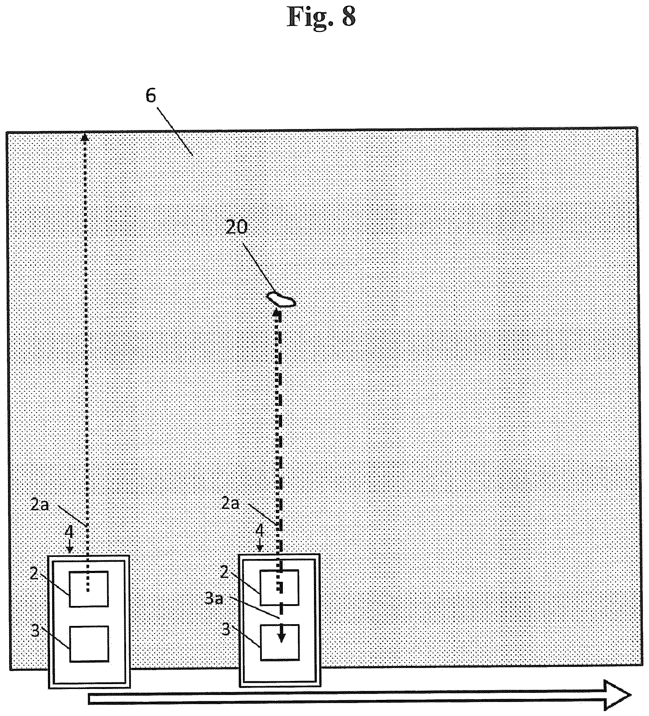

In Fig. 8 ist die ist Vorrichtung (1) für die einseitige zerstörungsfreie Prüfung von Objekten (6) aus verschiedenen Materialien mit Oberflächenwellen oder Plattenwellen in schematischer Draufsicht auf einem zu prüfenden Objekt (6) beispielhaft dargestellt. Wie dargestellt, weist das zu prüfende Objekt (6) einen Fehler (20), hier ein Loch bzw. Ausnehmung, auf. Es ist bekannt, dass bei der Handprüfung der Prüfkopf durch Positionsänderung und/oder Drehung bewegt wird. In Fig. 8 ist ein spezieller aber typischer Prüfvorgang dargestellt. Hierbei wird der Prüfkopf ohne Drehung linear von links nach rechts verschoben (in Pfeilrichtung). In jeder Prüfkopfposition sendet der Wandler ein Ultraschallsignal aus und empfängt die Echosignale. Idealerweise wird hierbei die gesamte Bauteilbreite mit einem Prüfschuss erfasst. Wenn ein Fehler (20) von dem Sendesignal erfasst wird, wird dieses zurückreflektiert (gestreut) und dieses Echosignal vom Empfangswandler empfangen. Der Abstand des Fehlers (20) vom Prüfkopf entspricht dabei der Laufzeit des Sende-Empfangssignales.

Generell kann durch die Vorrichtungen das Abscannen der Bauteiloberfläche entweder durch reine Translation des Prüfkopfes oder durch reine Rotation des Prüfkopfes (nach Art eines Radarbildes) oder durch überlagerte Translation und Rotation erfolgen. Die Wahl dieser Abtastarten ist abhängig von der Prüfanwendung.

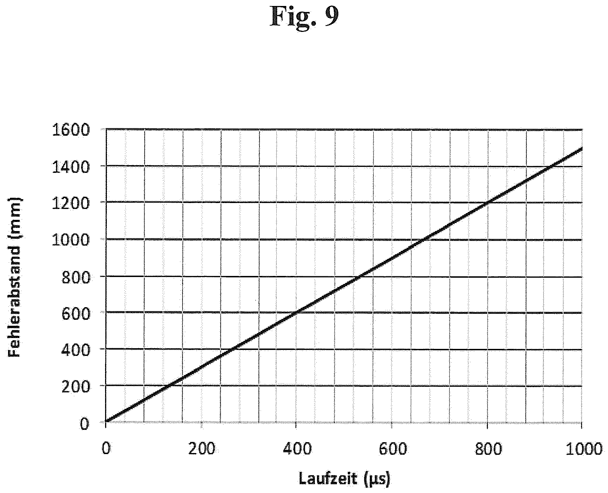

Fig. 9 zeigt einen typischen Zusammenhang zwischen Laufzeit und Fehlerabstand für eine Schallgeschwindigkeit im Bauteil von 3 mm/µs.

## Patentansprüche

1. Verfahren für die einseitige zerstörungsfreie Prüfung von Objekten (6) aus verschiedenen Materialien mit Oberflächenwellen oder Plattenwellen mit einer Vorrichtung (1), wobei die Vorrichtung (1) wenigstens ein Gehäuse (1a) umfasst, wobei in dem Gehäuse (1a) wenigstens zwei Wandler (2, 3) angeordnet sind, wobei wenigstens einer der Wandler ein erster Wandler (2) zum Erzeugen von Ultraschallpulsen ist und wenigstens einer der Wandler ein zum ersten Wandler (2) beabstandet angeordneter zweiter Wandler (3) zum Empfangen von Ultraschallsignalen ist, wobei die wenigstens zwei Wandler (2, 3) durch wenigstens einen gasgefüllten Raum (8) beabstandet gegenüber dem zu prüfenden Objekt (6) angeordnet sind, und die Vorrichtung (1) Verbindungsmittel (7) zum Verbinden der Vorrichtung (1) mit einer Ansteuer- und Auswertevorrichtung umfasst, durch die der erste Wandler (2) ansteuerbar und die vom zweiten Wandler (3) empfangenen Signale auswertbar sind, wobei der erste Wandler (2) in einem Winkel (α) zwischen 0° und 90° gegenüber dem Objekt (6) angeordnet ist und der zweite Wandler (3) ebenfalls in einem Winkel (β) zwischen 0° und 90° gegenüber dem Objekt (6) angeordnet ist, wobei der Winkel (α) des ersten Wandlers (2) und der Winkel (β) des zweiten Wandlers (3) gegenüber dem zu prüfenden Objekt (6) gleich ist, wobei die wenigstens zwei Wandler (2, 3) gegenüber dem zu prüfenden Objekt (6) in dieselbe Richtung geneigt sind, wobei die Vorrichtung eine Abstandskontrolleinheit aufweist, die die Abstände zwischen der Vorrichtung und dem zu prüfenden Objekt überwacht, **dadurch gekennzeichnet, dass** der erste Wandler (2) parallel zu dem zweiten Wandler (3) angeordnet ist und dass eine Luftkissenvorrichtung (1d; 1e) im unteren Bereich der Vorrichtung (1) angeordnet ist, bestehend aus den Schritten:
- Führen der Vorrichtung (1) entlang der Objektoberfläche (6) oder stationäres Positionieren der Vorrichtung auf dem Objekt (6),
- Erzeugen von Ultraschallpulsen mit wenigstens einer vorgegebenen Frequenz und einem gewählten Einfallswinkel zur Erzeugung von Oberflächenwellen oder Plattenwellenmoden in dem Objekt (6),
- Erfassen des als Oberflächenwellen oder Plattenwellenmoden propagierten Ultraschalls mit Abstand zum Einstrahlungsort,
- Auswerten und Analysieren der erfassten Signale.

2. Verfahren für die einseitige zerstörungsfreie Prüfung von Objekten (6) aus verschiedenen Materialien mit Oberflächenwellen oder Plattenwellen mit einer Vorrichtung (1), wobei die Vorrichtung (1) wenigstens zwei Gehäuse (1a, 10a) und wenigstens zwei Wandler (2, 3) umfasst, wobei in jedem der Gehäuse (1a, 10a) wenigstens einer (2; 3; 2, 3) der wenigstens zwei Wandler (2, 3) angeordnet ist, wobei wenigstens einer der Wandler ein erster Wandler (2) zum Erzeugen von Ultraschallpulsen ist und wenigstens einer der Wandler ein zum ersten Wandler (2) beabstandet angeordneter zweiter Wandler (3) zum Empfangen von Ultraschallsignalen ist, wobei die wenigstens zwei Wandler (2, 3) durch wenigstens einen gasgefüllten Raum (8) beabstandet gegenüber dem zu prüfenden Objekt (6) angeordnet sind, und die Vorrichtung (1) Verbindungsmittel (7) zum Verbinden der Vorrichtung (1) mit einer Ansteuer- und Auswertevorrichtung umfasst, durch die der erste Wandler (2) ansteuerbar und die vom zweiten Wandler (3) empfangenen Signale auswertbar sind, wobei der erste Wandler (2) in einem Winkel (α) zwischen 0° und 90° gegenüber dem Objekt (6) angeordnet ist und der zweite Wandler (3) ebenfalls in einem Winkel (β) zwischen 0° und 90° gegenüber dem Objekt (6) angeordnet ist, wobei der Winkel (α) des ersten Wandlers (2) und der Winkel (β) des zweiten Wandlers (3) gegenüber dem zu prüfenden Objekt (6) gleich ist, wobei die wenigstens zwei Wandler (2, 3) gegenüber dem zu prüfenden Objekt (6) in dieselbe Richtung geneigt sind, wobei der erste Wandler (2) parallel zu dem zweiten Wandler (3) angeordnet ist, **dadurch gekennzeichnet, dass** die Vorrichtung eine Abstandskontrolleinheit aufweist, die die Abstände zwischen der Vorrichtung und dem zu prüfenden Objekt überwacht und dass eine Luftkissenvorrichtung (1d; 1e) im unteren Bereich der Vorrichtung (1) angeordnet ist, bestehend aus den Schritten:
- Führen der Vorrichtung (1) entlang der Objektoberfläche (6) oder stationäres Positionieren der Vorrichtung auf dem Objekt (6),
- Erzeugen von Ultraschallpulsen mit wenigstens einer vorgegebenen Frequenz und einem gewählten Einfallswinkel zur Erzeugung von Oberflächenwellen oder Plattenwellenmoden in dem Objekt (6),
- Erfassen des als Oberflächenwellen oder Plattenwellenmoden propagierten Ultraschalls mit Abstand zum Einstrahlungsort,
- Auswerten und Analysieren der erfassten Signale.

3. Verfahren gemäß Anspruch 1 oder Anspruch 2, **dadurch gekennzeichnet, dass** zwischen dem wenigstens einen ersten Wandler (2) und dem wenigstens einen zweiten Wandler (3) wenigstens eine schallabsorbierende und/oder reflektierende Schicht (1b) angeordnet ist.

4. Verfahren gemäß Anspruch 1 oder Anspruch 2, **dadurch gekennzeichnet, dass** der erste Wandler (2) und der zweite Wandler (3) segmentiert sind und die erzeugten Ultraschallpulse und die empfangenen Ultraschallsignale gemäß des Phased-Array-Prinzips einzeln elektronisch ansteuerbar sind.

5. Verfahren gemäß Anspruch 1 oder Anspruch 2, **dadurch gekennzeichnet, dass** die Ansteuer- und Auswertevorrichtung über Verbindungsmittel (7) zum Verbinden der Vorrichtung (1) mit einer Ansteuer- und Auswertevorrichtung mit der Vorrichtung (1) verbunden ist und die Ansteuer- und Auswertevorrichtung und der erste Wandler (2) zusammen zur Erzeugung von Ultraschallsignalen mit einer Frequenz von 50 kHz bis 2 MHz, vorzugsweise von 100 bis 400 kHz ausgebildet sind.

6. Verfahren gemäß Anspruch 1 oder Anspruch 2, **dadurch gekennzeichnet, dass** Kufen (1c), Abstandshalter oder dergleichen im unteren Bereich der Vorrichtung (1) angeordnet sind.

7. Verfahren gemäß einer der vorangegangenen Ansprüche, **dadurch gekennzeichnet, dass** die Vorrichtung (1) manuell oder scannergeführt über die Objekte (6) geführt wird.

## Claims

1. Method for one-sided nondestructive testing of objects (6) made of different materials with surface waves or Lamb waves, using a device (1), the device (1) comprising at least one housing (1a), wherein at least two transducers (2, 3) are arranged in the housing (1a), wherein at least one of the transducers is a first transducer (2) for generating ultrasonic pulses and at least one of the transducers is a second transducer (3) spaced apart from the first transducer (2) for receiving ultrasonic signals, wherein the at least two transducers (2, 3) are arranged spaced apart from the object (6) to be tested by means of at least one gas-filled space (8), and the device (1) comprises connecting means (7) for connecting the device (1) to a control and evaluation device, by means of which the first transducer (2) can be controlled and the signals received by the second transducer (3) can be evaluated, wherein the first transducer (2) is arranged at an angle (α) of between 0° and 90° relative to the object (6) and the second transducer (3) is likewise arranged at an angle (β) of between 0° and 90° relative to the object (6), wherein the angle (α) of the first transducer (2) and the angle (β) of the second transducer (3) relative to the object (6) to be tested is the same, wherein the at least two transducers (2, 3) are inclined in the same direction in relation to the object (6) to be tested, wherein the device has a distance control unit which monitors the distances between the device and the object to be tested, **characterised in that** the first transducer (2) is arranged parallel to the second transducer (3) and an air cushion device (1d; 1e) is arranged in the lower region of the device (1), said method consisting of the following steps:
- guiding the device (1) along the surface of the object (6) or stationary positioning the device on the object (6),
- generating ultrasonic pulses with at least one predefined frequency and a selected angle of incidence so as to generate surface waves or Lamb wave modes in the object (6),
- detecting the ultrasound propagated as surface waves or Lamb wave modes at a distance from the site of irradiation,
- evaluating and analysing the identified signals.

2. Method for one-sided nondestructive testing of objects (6) made of different materials with surface waves or Lamb waves, using a device (1), the device (1) comprising at least two housings (1a, 10a) and at least two transducers (2, 3), wherein at least one (2; 3; 2, 3) of the at least two transducers (2, 3) is arranged in each of the housings (1a, 10a), wherein at least one of the transducers is a first transducer (2) for generating ultrasonic pulses and at least one of the transducers is a second transducer (3) spaced apart from the first transducer (2) for receiving ultrasonic signals, wherein the at least two transducers (2, 3) are arranged spaced apart from the object (6) to be tested by means of at least one gas-filled space (8), and the device (1) comprises connecting means (7) for connecting the device (1) to a control and evaluation device, by means of which the first transducer (2) can be controlled and the signals received by the second transducer (3) can be evaluated, wherein the first transducer (2) is arranged at an angle (α) of between 0° and 90° relative to the object (6) and the second transducer (3) is likewise arranged at an angle (β) of between 0° and 90° relative to the object (6), wherein the angle (α) of the first transducer (2) and the angle (β) of the second transducer (3) relative to the object (6) to be tested is the same, wherein the at least two transducers (2, 3) are inclined in the same direction in relation to the object (6) to be tested, wherein the first transducer (2) is arranged parallel to the second transducer (3), **characterised in that** the device has a distance control unit which monitors the distances between the device and the object to be tested and an air cushion device (1d; 1e) is arranged in the lower region of the device (1), said method consisting of the following steps:
- guiding the device (1) along the surface of the object (6) or stationary positioning the device on the object (6),
- generating ultrasonic pulses with at least one predefined frequency and a selected angle of incidence so as to generate surface waves or Lamb wave modes in the object (6),
- detecting the ultrasound propagated as surface waves or Lamb wave modes at a distance from the site of irradiation,
- evaluating and analysing the identified signals.

3. Method according to claim 1 or claim 2, **characterised in that** at least one sound-absorbing and/or reflecting layer (1b) is arranged between the at least one first transducer (2) and the at least one second transducer (3).

4. Method according to claim 1 or claim 2, **characterised in that** the first transducer (2) and the second transducer (3) are segmented and the generated ultrasonic pulses and the received ultrasonic signals are individually electronically controllable in accordance with the phased array principle.

5. Method according to claim 1 or claim 2, **characterised in that** the control and evaluation device is connected to the device (1) by means of connecting means (7) for connecting the device (1) to a control and evaluation device and the control and evaluation device and the first transducer (2) are together configured to generate ultrasonic signals with a frequency of 50 kHz to 2 MHz, preferably 100 to 400 kHz.

6. Method according to claim 1 or claim 2, **characterised in that** skids (1c), spacers or the like are arranged in the lower region of the device (1).

7. Method according to one of the preceding claims, **characterised in that** the device (1) is guided across the objects (6) manually or in a manner controlled by a scanner.

## Revendications

1. Procédé pour le contrôle non destructif sur une même face d'objets (6) constitués de différents matériaux avec des ondes de surface ou des ondes de Lamb avec un dispositif (1), dans lequel le dispositif (1) comprend au moins un boîtier (1a), au moins deux transducteurs (2, 3) étant disposés dans le boîtier (1a), au moins l'un des transducteurs étant un premier transducteur (2) pour générer des impulsions à ultrasons, et au moins l'un des transducteurs étant un second transducteur (3) disposé à distance du premier transducteur (2) pour recevoir des signaux à ultrasons, lesdits au moins deux transducteurs (2, 3) étant disposés distants de l'objet (6) à contrôler au moyen d'au moins un espace (8) rempli de gaz, et le dispositif (1) comprenant des moyens de connexion (7) pour relier le dispositif (1) à un dispositif de commande et d'évaluation au moyen duquel le premier transducteur (2) peut être commandé et les signaux reçus par le second transducteur (3) peuvent être évalués, le premier transducteur (2) étant disposé sous un angle (α) compris entre 0° et 90° par rapport à l'objet (6), et le second transducteur (3) étant également disposé sous un angle (β) compris entre 0° et 90° par rapport à l'objet (6), l'angle (α) du premier transducteur (2) et l'angle (β) du second transducteur (3) étant identiques par rapport à l'objet (6) à contrôler, lesdits au moins deux transducteurs (2, 3) étant inclinés dans la même direction par rapport à l'objet (6) à contrôler, le dispositif comprenant une unité de contrôle de distance qui surveille les distances entre le dispositif et l'objet à contrôler, **caractérisé en ce que** le premier transducteur (2) est disposé parallèlement au second transducteur (3), et **en ce qu'**un dispositif à coussin d'air (1d ; 1e) est disposé dans la région inférieure du dispositif (1), procédé comprenant les étapes consistant à :
- guider le dispositif (1) le long de la surface de l'objet (6) ou positionner le dispositif de façon stationnaire sur l'objet (6),
- générer des impulsions à ultrasons avec au moins une fréquence prédéterminée et un angle d'incidence sélectionné pour générer dans l'objet (6) des ondes de surface ou des modes d'ondes de Lamb,
- détecter les ultrasons qui se propagent sous forme d'ondes de surface ou d'ondes de Lamb à distance du point d'irradiation,
- évaluer et analyser les signaux détectés.

2. Procédé pour le contrôle non destructif sur une même face d'objets (6) constitués de différents matériaux avec des ondes de surface ou des ondes de Lamb avec un dispositif (1), dans lequel le dispositif (1) comprend au moins deux boîtiers (1a, 10a) et au moins deux transducteurs (2, 3), au moins un (2 ; 3 ; 2, 3) desdits au moins deux transducteurs (2, 3) étant disposé dans chacun des boîtiers (1a, 10a), au moins l'un des transducteurs étant un premier transducteur (2) pour générer des impulsions à ultrasons et au moins l'un des transducteurs étant un second transducteur (3) disposé à distance du premier transducteur (2) pour recevoir des signaux à ultrasons, lesdits au moins deux transducteurs (2, 3) étant disposés distants de l'objet (6) à contrôler au moyen d'au moins un espace (8) rempli de gaz, et le dispositif (1) comprenant des moyens de connexion (7) pour relier le dispositif (1) à un dispositif de commande et d'évaluation au moyen duquel le premier transducteur (2) peut être commandé et les signaux reçus par le second transducteur (3) peuvent être évalués, le premier transducteur (2) étant disposé selon un angle (α) compris entre 0° et 90° par rapport à l'objet (6), et le second transducteur (3) étant également disposé selon un angle (β) compris entre 0° et 90° par rapport à l'objet (6), l'angle (α) du premier transducteur (2) et l'angle (β) du second transducteur (3) étant identiques par rapport à l'objet (6) à contrôler, lesdits au moins deux transducteurs (2, 3) étant inclinés dans la même direction par rapport à l'objet (6) à contrôler, le premier transducteur (2) étant disposé parallèlement au second transducteur (3), **caractérisé en ce que** le dispositif comprend une unité de contrôle de distance qui surveille les distances entre le dispositif et l'objet à contrôler, et **en ce qu'**un dispositif à coussin d'air (1d ; 1e) est disposé dans la région inférieure du dispositif (1), procédé comprenant les étapes consistant à :
- guider le dispositif (1) le long de la surface de l'objet (6) ou positionner le dispositif de façon stationnaire sur l'objet (6),
- générer des impulsions à ultrasons avec au moins une fréquence prédéterminée et un angle d'incidence sélectionné pour générer dans l'objet (6) des ondes de surface ou des modes d'ondes de Lamb,
- détecter les ultrasons qui se propagent sous forme d'ondes de surface ou d'ondes de Lamb à distance du point d'irradiation,
- évaluer et analyser les signaux détectés.

3. Procédé selon la revendication 1 ou la revendication 2, **caractérisé en ce qu'**au moins une couche isolante acoustique et/ou réfléchissante (1b) est disposée entre ledit au moins un premier transducteur (2) et ledit au moins un second transducteur (3).

4. Procédé selon la revendication 1 ou la revendication 2, **caractérisé en ce que** le premier transducteur (2) et le second transducteur (3) sont segmentés et les impulsions à ultrasons générées et les signaux à ultrasons reçus peuvent être commandés électroniquement de façon individuelle selon le principe de réseau à commande de phase.

5. Procédé selon la revendication 1 ou la revendication 2, **caractérisé en ce que** le dispositif de commande et d'évaluation est relié au dispositif (1) par des moyens de liaison (7) pour relier le dispositif (1) à un dispositif de commande et d'évaluation, et le dispositif de commande et d'évaluation et le premier transducteur (2) sont conçus ensemble pour générer des signaux à ultrasons avec une fréquence comprise entre 50 kHz et 2 MHz, de préférence entre 100 et 400 kHz.

6. Procédé selon la revendication 1 ou la revendication 2, **caractérisé en ce que** des patins (1c), des entretoises ou des composants analogues sont disposés dans la région inférieure du dispositif (1).

7. Procédé selon l'une des revendications précédentes, **caractérisé en ce que** le dispositif (1) est guidé sur les objets (6) de façon manuelle ou par scanner.
